# EUROPÄISCHE PATENTSCHRIFT

(11) **EP 1 669 248 B1**
(45) Veröffentlichungstag und Bekanntmachung des Hinweises auf die Patenterteilung: **19.11.2008**
(21) Anmeldenummer: 05022732.1
(22) Anmeldetag: 19.10.2005
(51) Int. Cl.: B60R 19/34

(54) **Stossfängeranordnung für ein Kraftfahrzeug**
Bumper arrangement for a motor vehicle
Agencement de pare-choc pour un véhicule automobile

(30) Priorität: 13.12.2004 DE 102004060088
(43) Veröffentlichungstag der Anmeldung: 14.06.2006
(73) Patentinhaber: Benteler Automobiltechnik GmbH, 33104 Paderborn (DE)
(72) Erfinder: Arns, Wilhelm, 33102 Paderborn (DE); Rotzoll, Sven-Lars, 33098 Paderborn (DE)
(74) Vertreter: Griepenstroh, Jörg

(56) Entgegenhaltungen:
- EP-A1- 1 219 499
- DE-A1- 4 322 353
- DE-U1- 29 808 143
- GB-A- 2 295 993
- GB-A- 2 299 551
- JP-A- 11 208 392
- US-A- 5 005 887

## Beschreibung

Die Erfindung betrifft eine Stoßfängeranordnung für ein Kraftfahrzeug gemäß den Merkmalen im Oberbegriff des Patentanspruchs 1.

Stoßfänger werden quer an Front und Heck eines Kraftfahrzeugs zwischen der die Karosserie abschließenden Kunststoffverschalung und dem Rahmen des Kraftfahrzeugs angeordnet. Um Beschädigung der Fahrzeugstruktur bei Front- oder Heckaufprällen mit geringen Geschwindigkeiten zu vermeiden, werden Deformationselemente, sogenannte Crashboxen, integriert. Crashboxen sind dünnwandige, in der Regel rechteckige Elemente aus Stahl, Aluminium oder Kunststoff. Sie können durch Fügen aus gepressten Blechschalen oder einteilig, beispielsweise als extrudiertes Aluminiumprofil, hergestellt sein.

Angeordnet zwischen Fahrzeuglängsträger und dem Stoßfängerquerträger absorbieren die Crashboxen die aus einem Anprall resultierende kinetische Energie, in dem diese in Verformungsarbeit umgewandelt wird. Hierdurch soll vermieden werden, dass der Längsträger bleibend beschädigt wird, wenn ein kritisches Lastniveau überschritten wird.

Es gibt unterschiedliche Möglichkeiten, Crashboxen an den Längsträgern zu befestigen. Es ist bekannt, Crashboxen über Flanschplatten an der Stirnseite des Längsträgers abzustützen. Zum Verschrauben ist auch im Bereich des Längsträgers ein entsprechender Anbindungsbereich, d.h. ein entsprechender Flansch erforderlich. Diese Art der Anbindung der Crashbox erfordert grundsätzlich Bauteile, die das Gesamtgewicht des Kraftfahrzeugs erhöhen.

Es ist ferner bekannt, Crashboxen durch Querbolzen an den Längsträgern zu fixieren. Die Anbindung kann wie in der DE 298 08 143 U1 vorgeschlagen, seitlich erfolgen, so dass bei dieser Bauform, ebenso wie bei der stirnseitigen Abstützung durch Flansche, erhöhter Bauraum erforderlich ist.

Unabhängig von der Art der Befestigung der Crashbox an einem Längsträger sind jedoch Toleranzausgleichselemente, insbesondere in Form von Langlöchern erforderlich. Diese sind grundsätzlich in den Flanschplatten vorgesehen. Wenn Crashboxen ohne Flanschplatten montiert werden, so ist ein Toleranzausgleich zwischen dem Stoßfängerquerträger und der Crashbox erforderlich. Dies ist durch relativ aufwendige Schraublösungen realisierbar.

Aus der EP 1 219 499 A1 ist eine Verbindungsstruktur zwischen einem Stoßfängerquerträger und einem stoßabsorbierendem Element bekannt. Das stoßabsorbierende Element bzw. die Crashbox weist einen im Wesentlichen konstanten Querschnitt auf, wobei das stoßabsorbierende Element mit dem Stoßfängerquerträger verbunden ist. In der US 5,005,887 A wird zudem beschrieben, dass als Montagevorrichtung bei einem Stoßfänger eine tassenförmige Aufnahme zum Einsatz kommen kann, die einen minimalen Öffnungswinkel von 3° bis 5° aufweist und auf den Längsträger geschoben wird. Durch die anschließende Befestigung durch Verbolzen werden die gegenüberliegenden Wände vollflächig zum Aufeinanderliegen gebracht. Die mit der vorliegenden Erfindung zu lösende Aufgabe wird darin gesehen, den Montageaufwand durch die Selbstzentrierung zu reduzieren und eine Stoßfängeranordnung mit solchen vorteilhaften Eigenschaften aufzuzeigen.

Hiervon ausgehend liegt der Erfindung die Aufgabe zugrunde, eine Stoßfängeranordnung mit einer Crashbox bereit zu stellen, welche besonders Bauraum sparend, d.h. unter optimaler Ausnutzung des Bauraums an den Längsträgern fixierbar ist, die ein geringes Eigengewicht besitzt und Toleranzen im Anbindungsbereich zwischen den Längsträgern und den Crashboxen ausgleichen kann.

Diese Aufgabe ist bei einer Stoßfängeranordnung mit den Merkmalen des Patentanspruchs 1 gelöst.

Vorteilhafte Ausgestaltungen des Erfindungsgedankens sind Gegenstand der Unteransprüche.

Bei der erfindungsgemäßen Stoßfängeranordnung werden die Crashboxen direkt an die Längsträger ohne Zwischengliederung von Flanschplatten angeschraubt. Da durch wird die angestrebte Gewichtsersparnis erreicht. Die Crashboxen sind derart ausgelegt, dass sie zum Querschnittsprofil der Längsträger nominal auf Abstand konstruiert sind, um bei den auftretenden Toleranzen unter zumindest lokaler elastischer oder plastischer Verformung an die Längsträger montiert werden zu können. Hierzu besitzen die Crashboxen Befestigungsabschnitte, deren Wandungen mit den Wandungen der Längsträger verbolzt werden. Die Bolzen überbrücken einen großzügig bemessenen Toleranzabstand zwischen den Wandungen und drängen die Wandungen der Crashboxen gegen die Wandungen der Längsträger. Bei der Montage nimmt der Stoßfängerquerträger mit den Crashboxen eine vorgegebene Position ein, die durch Selbstzentrierung der Crashboxen gegenüber den Längsträgern exakt eingehalten wird. Diese Selbstzentrierung ermöglicht den Wegfall von fertigungstechnisch aufwendigen Langlöchern im Längsträger oder in den Crashboxen. Entscheidend ist, dass sich die räumliche Lage der Crashboxen beim Anziehen der Bolzen nicht mehr verändert. Dies gelingt durch besonders gestaltete Befestigungsabschnitte, die während der Montage gezielt elastisch oder sogar plastisch geformt werden. Der Toleranzabstand zwischen den Wandungen der Befestigungsabschnitte und der Längsträger ist gezielt größer bemessen als es fertigungstechnisch realisierbar wäre, um eine geringfügige Querverschiebung des Stoßfängerquerträgers mit den Crashboxen quer zur Fahrzeuglängsachse zu ermöglichen. Im Rahmen der Erfindung sind die Crashboxen fest mit dem Stoßfängerquerträger verbunden. Aufwendige Justierungen im Anbindungsbereich der Crashboxen an die Stoßfängerquerträger entfallen. Auch dadurch ist eine Gewichtseinsparung möglich. Ferner reduziert sich der Montageaufwand durch den Wegfall der nachträglich erforderlichen Justierung.

Der Stoßfängerquerträger und die Crashboxen bilden eine sehr leicht bauende Einheit, die besonders einfach und rasch montierbar ist. Die Crashboxen bestehen entweder aus zwei Halbschalen, die nur außerhalb der Befestigungsabschnitte miteinander verbunden sind, d.h. die Halbschalen sind im Bereich des Befestigungsabschnitts nicht miteinander verbunden. Dadurch sind die Halbschalen in ihrem Befestigungsabschnitt relativ zueinander leichter verformbar. Es entstehen geringere Spannungsspitzen. Die Anzugsmomente der Bolzen können niedriger gewählt werden und die Montage wird vereinfacht.

Bei einteilig ausgebildeten Crashboxen, beispielsweise in Form eines Hohlprofils, sind in den Wandungen der Befestigungsabschnitte Längsschlitze ausgebildet, so dass die Wandungen elastisch oder plastisch verformbare Befestigungszungen bilden. Selbstverständlich können auch bei Crashboxen, die aus Halbschalen gefügt sind, zusätzliche Längsschlitze in den Befestigungsabschnitten vorgesehen sein, um die Elastizität und damit die Anschmiegbarkeit an die Längsträger zu verbessern. Die Längsschlitze erstrecken sich bis zu den Stimseiten des Befestigungsabschnitts. Die Längsschlitze können insbesondere im Eckbereich der Crashboxen ausgebildet sein, so dass bei einem beispielsweise rechteckigen Profil vier unabhängig voneinander verformbare Befestigungszungen entstehen, die ohne Belastung der jeweils anderen Befestigungszungen an die Wandungen der Längsträger gedrängt werden können und den vorgegebenen Toleranzabstand überbrücken.

Die Befestigungsabschnitte können die Längsträger außenseitig umgreifen. In diesem Fall ist die Crashbox quasi über den Längsträger gestülpt. Die Befestigungsabschnitte können allerdings auch in die Längsträger eingeschoben sein. In diesem Fall greift die Crashbox in die Längsträger ein. Je nach relativer Anordnung der Crashbox gegenüber dem Längsträger werden die Wandungen der Befestigungsabschnitte entweder von außen auf die Außenflächen des Längsträgers gedrückt oder bei eingeschobener Crashbox von innen nach außen gezogen, d.h. gegen die Innenflächen des Längsträgers gepresst.

Als besonders vorteilhaft wird es angesehen, wenn die Halbschalen der Crashbox über randseitige Flanschstege miteinander verbunden sind und auch die Längsträger aus jeweils zwei Halbschalen gebildet sind, die ebenfalls über randseitige Flanschstege miteinander zu Flanschen verbunden sind. In diesem Fall können die Flanschstege der Crashboxen in ihren Befestigungsabschnitten im Abstand zueinander verlaufen und die Flansche des Längsträgers mit Toleranzabstand umgreifen. Die Flanschstege der Crashboxen umklammern hierbei unter Einhaltung des Toleranzabstands den Flansch des Längsträgers. Ist eine gewünschte Montageposition erreicht, kann zunächst ein die Flansche der Längsträger und die Flanschstege der Crashboxen durchsetzender Bolzen angezogen werden, wodurch die Crashbox gegenüber dem Längsträger zentriert wird. Die im Abstand zueinander verlaufenden Flanschstege der Crashboxen dienen im Befestigungsabschnitt gewissermaßen als Längsschlitz, wodurch die Halbschalen der Crashboxen im Anbindungsbereich an die Längsträger flexibler und leichter verformbar sind.

Die Anbindung der Crashboxen an den Stoßfängerquerträger erfolgt in vorteilhafter Weiterbildung der Erfindung nicht nur durch die in der Regel kastenförmigen Mittelteile der Crashboxen, sondern auch durch die randseitigen Flanschstege. Hierzu ist der Stoßfängerquerträger im Querschnitt hutförmig profiliert und weist einen in Richtung der Crashboxen ausgestellten Mittelsteg mit sich daran anschließenden abgewinkelten Schenkeln auf. Das hutförmige Profil dient zur Erhöhung der Biegesteifigkeit des Stoßfängerquerträgers und erstreckt sich daher in der Regel über die gesamte Länge des Stoßfängerquerträgers. Während sich die kastenförmigen Mittelteile der Crashboxen an den Mittelstegen des Stoßfängerquerträgers abstützen, erstrecken sich die Flanschstege der Crashboxen über die Stirnseiten ihrer jeweiligen Mittelteile hinaus bis zu den Schenkeln. Hierdurch erfahren die Schenkel eine zusätzliche Aussteifung und Abstützung, die sich positiv auf das Deformationsverhalten der Crashbox auswirkt. Mit dem in der Schalenbauweise vorhandenen Flansch wird die Crashbox insbesondere mit dem Querträger verschweißt. Zusätzliche Schottbleche können in diesem Bereich entfallen.

Durch die besondere Ausbildung des Befestigungsabschnittes ist es möglich, den Toleranzabstand im Anbindungsbereich an die Längsträger deutlich größer zu wählen, als es die fertigungstechnischen Möglichkeiten erlauben. Insbesondere ist der Toleranzabstand größer als die Wandstärke des Befestigungsabschnitts. Der Toleranzabstand wird als derjenige Abstand der zu verbindenden Wandungen im Überlappungsbereich verstanden, der bei absolut zentrischer Lage der Crashboxen gegenüber den Längsträgern zwischen allen jeweils zu verbindenden Wandungen vorhanden ist. Wenn nun die Crashbox bereits vor dem Verbolzen an einer Wandung der Längsträger anliegt, stellt sich an der gegenüberliegenden Seite der Crashbox ein Toleranzabstand ein, der beispielsweise doppelt so groß ist wie die Wandstärke des Befestigungsabschnitts. Die Befestigungsabschnitte sind konstruktiv derart ausgelegt, dass auch diese Extremlagen montagetechnisch überbrückt werden. Insbesondere besitzen die vorgesehenen Bolzen eine an den Toleranzabstand angepasste Länge.

Die Erfindung wird nachfolgend anhand der in den Zeichnungen dargestellten Ausführungsbeispiele näher erläutert. Es zeigen:
- Figur 1: eine perspektivische Ansicht eines Längsträgers eines Kraftfahrzeugs mit eingeführter Crashbox;
- Figur 2: eine perspektivische rückwärtige Ansicht einer Stoßfängeranordnung mit einem Stoßfängerquerträger mit angeschweißten Crashboxen;
- Figur 3: eine vergrößerte Darstellung einer Crashbox der Figur 2;
- Figur 4: eine perspektivische Ansicht einer Stoßfängeranordnung mit einer einen Längsträger umgreifenden Crashbox und
- Figur 5: den Befestigungsabschnitt der Crashbox der Figur 4 in Blickrichtung von oben und in vergrößerter Darstellung.

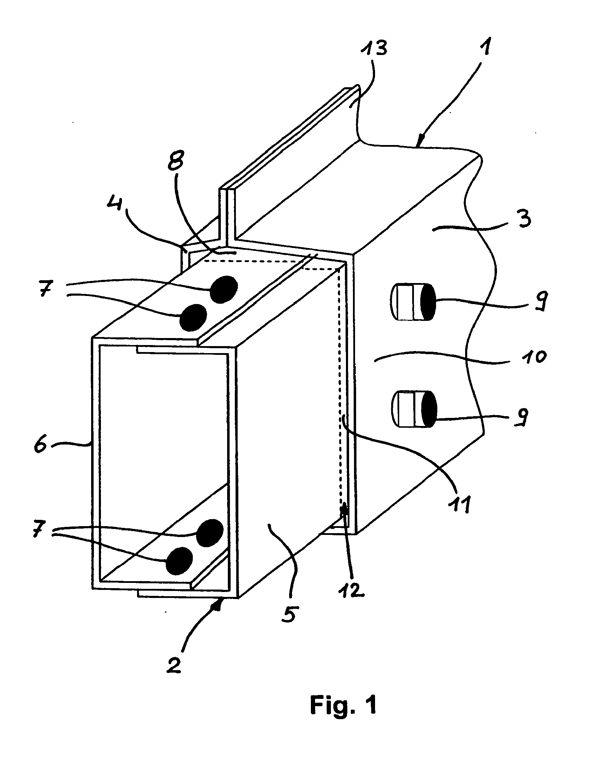

Figur 1 zeigt einen Endabschnitt eines Längsträgers 1 eines nicht näher dargestellten Kraftfahrzeugs und eine in den Längsträger 1 eingeschobene. Crashbox 2. Sowohl der Längsträger 1 als auch die Crashbox 2 sind in Schalenbauweise gefertigt und weisen jeweils zwei Halbschalen 3, 4, 5, 6 auf. Die Halbschalen 5, 6 der Crashbox 2 sind jeweils U-förmig konfiguriert und sind zu einem kastenförmiges Hohlprofil gefügt, wobei die überlappenden oberen und unteren Schenkel der Halbschalen 5, 6 über Befestigungspunkte 7 miteinander verschweißt sind. Die Befestigungspunkte 7 sind nur symbolisch eingezeichnet und sollen verdeutlichen, dass der in den Längsträger 1 eingreifende Befestigungsabschnitt 8 keine derartigen Befestigungspunkte 7 aufweist. Im Befestigungsabschnitt 8 sind die Halbschalen 5, 6 nicht miteinander verbunden.

Die Crashbox 2 ist über Bolzen 9 mit dem Längsträger 1 verschraubt. Die Bolzen 9 durchsetzen die endseitige Wandung 10 des Längsträgers 1 sowie die Wandung 11 der Crashbox 2. Wesentlich bei der dargestellten Verbindung zwischen dem Längsträger 1 und der Crashbox 2 ist, dass zwischen den Wandungen 10, 11 ein Toleranzabstand 12 vorhanden ist, der durch eine gestrichelte Linie erkennbar ist, die in der Stirnebene des Längsträgers 1 auf die Crashbox 2 projiziert ist. Der Toleranzabstand 12 ist sowohl zwischen den sichtbaren Wandungen 10, 11 des Längsträgers 1 und der Crashbox 2 vorhanden als auch auf der in der Bildebene verdeckten Seite. Der Toleranzabstand 12 ist in diesem Ausführungsbeispiel auch an der nicht sichtbaren Unterseite der Crashbox 2 und auch an der, einem Flansch 13 zugewandten Oberseite der Crashbox 2 ausgebildet. Dadurch, dass der Befestigungsabschnitt 8 keine Befestigungspunkte 7 aufweist, können die Wandungen 11 der Crashbox 2 durch Anziehen der Bolzen 9 gegen die Innenseite der Wandung 10 des Längsträgers 1 gezogen werden. In symmetrischer Anordnung sind entsprechende Bolzen 9 auch auf der gegenüberliegenden Seite des Längsträgers 1 vorhanden, wodurch bei gleichzeitigem Anziehen der Bolzen 9 die räumliche Lage der Crashbox 2 gegenüber dem Längsträger 1 eingehalten wird und die Crashbox 2 zentriert innerhalb des Längsträgers 1 befestigt werden kann.

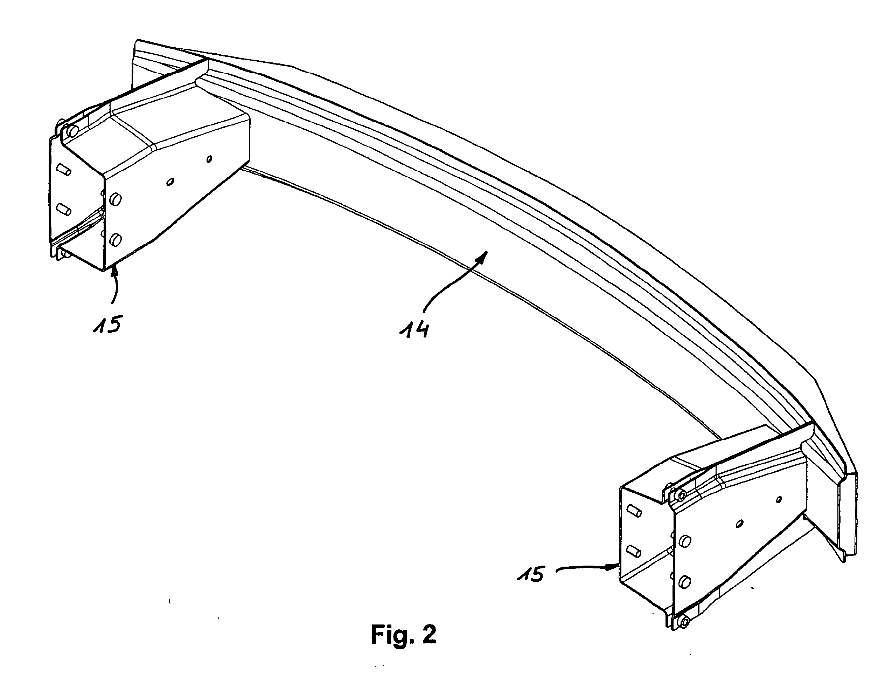

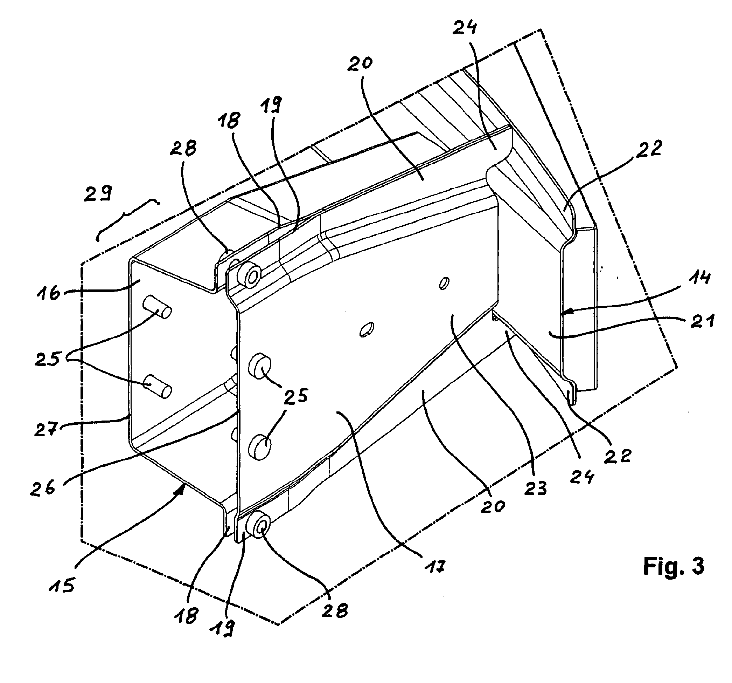

Figur 2 zeigt eine Ausführungsform einer Stoßfängeranordnung, bei welcher ein Stoßfängerquerträger 14 in seinem Endbereich mit zwei Crashboxen 15 in Schalenbauweise verschweißt ist. Figur 3 zeigt die in der Bildebene rechte Crashbox 15 in vergrößerter Darstellung. Die Crashbox 15 umfasst eine erste Halbschale 16 und eine zweite Halbschale 17, die über jeweils randseitige Flanschstege 18, 19 miteinander zu Flanschen 20 verbunden sind. Die Flansche 20 verlaufen außermittig, da die erste Halbschale 16 im Querschnitt im Wesentlichen U-förmig konfiguriert ist, während die zweite Halbschale 17 gewissermaßen als Schließblech dient, das zwar ebenfalls im Querschnitt U-förmig konfiguriert ist, allerdings eine geringere Tiefe besitzt.

Die Crashbox 15 ist mit dem im Querschnitt hutförmig profilierten Stoßfängerquerträger 14 verschweißt. Der Stoßfängerquerträger 14 besitzt einen in Richtung der Crashboxen 15 ausgestellten Mittelsteg 21, an welchen sich abgewinkelte Schenkel 22 anschließen. Das von der Crashbox 15 gebildete kastenförmige Mittelteil 23 besitzt in Richtung auf die Längsträger eine in der Vertikalen gemessene größere Höhe und verjüngt sich in Richtung auf den Stoßfängerquerträger 14 trapezförmig, so dass sich das Mittelteil 23 lediglich an dem Mittelsteg 21 des Stoßfängerquerträgers 14 abstützt. Die randseitigen Flansche 20 der Crashbox 15 werden infolge der abnehmenden Höhe des Mittelteils 23 in Richtung auf den Stoßfängerquerträger 14 zunehmend breiter und erreichen ihr Maximum im Bereich des Mittelstegs 21 des Stoßfängerquerträgers 14. Die Flansche 20 erstrecken sich in dieser Ausführungsform allerdings über den Mittelteil 23 hinaus und stoßen an den Schenkeln 22 des Stoßfängerquerträgers 14 an. Hier sind die Flansche 20 mit den Schenkeln 22 verschweißt und dienen zur zusätzlichen Aussteifung der dargestellten Stoßfängeranordnung. Die vorstehenden Endabschnitte 24 sind an die rückwärtige Kontur des Stoßfängerquerträgers 14 und insbesondere die Radien im Übergangsbereich von dem Mittelsteg 21 und den Schenkeln 22 angepasst. Dadurch können die Endabschnitte 24 der Flansche 20 über ihre gesamte Kontaktfläche mit dem Stoßfängerquerträger 14 verschweißt werden.

Die dargestellte Crashbox 15 ist dafür vorgesehen, auf einen Längsträger aufgeschoben zu werden, d.h. ihn außenseitig zu umgreifen. Nach dem Aufschieben auf den Längsträger werden die dargestellten Bolzen 25 in fluchtende Bohrungen in den korrespondierenden Wandungen 26, 27 der ersten und zweiten Halbschale 16, 17 und des nicht näher dargestellten Längsträgers eingesetzt. Zusätzliche Bolzen 28 durchsetzen die Flansche 20 die die im Befestigungsabschnitt 29 im parallelen Abstand zueinander verlaufenden Flanschstege 18, 19. Wesentlich bei der dargestellten Crashbox 15 ist - in Analogie zu der Ausführungsform der Figur 1 -, dass die Halbschalen 16, 17 im Bereich des Befestigungsabschnitts 29 nicht miteinander verbunden sind. Die Halbschalen 16, 17 sind lediglich dort fest miteinander verbunden, wo die Flanschstege 18, 19 aneinander anliegen und den Flansch 20 bilden. Zwischen dem Befestigungsabschnitt 29 und dem Flansch 20 ist ein Übergangsbereich ausgebildet, in welchem der Abstand der Flanschstege 18, 19 bis auf den vorgegebenen Abstand zunimmt. Dadurch entsteht ein keilförmiger Spalt, der bis auf das vorgegebene Sollmaß, d.h. auf die gewünschte Beabstandung der Flanschstege 18, 19 aufgeweitet wird.

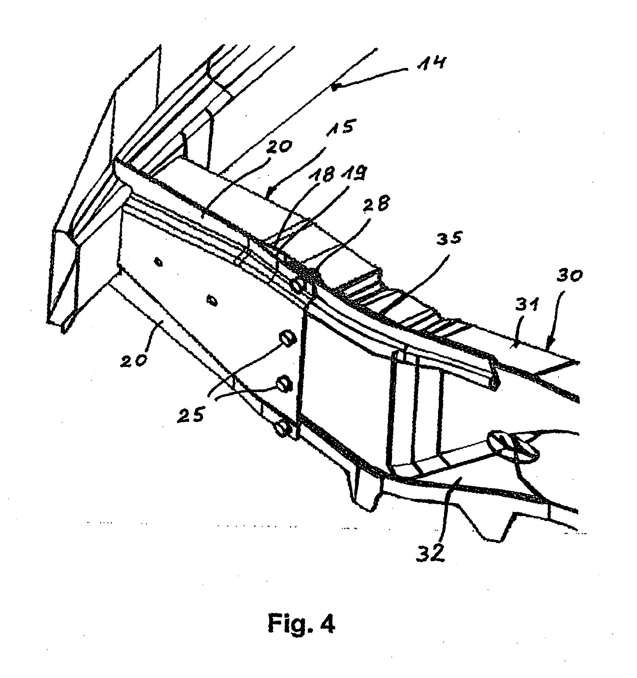

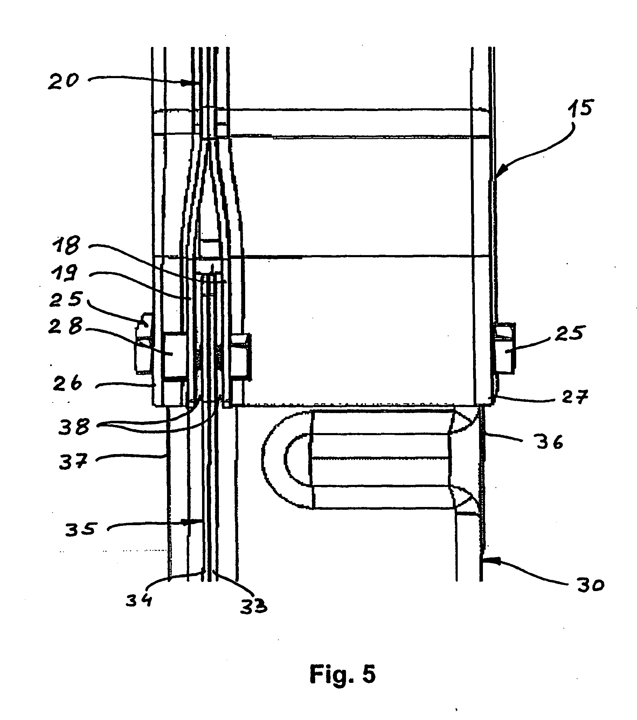

Anhand der Figuren 4 und 5 ist zu erkennen, wie die in den Figuren 2 und 3 dargestellten Crashboxen 15 mit einem Längsträger 30 gekoppelt werden. Der Längsträger 30 ist ebenso wie die dargestellte Crashbox 15 ein aus zwei Halbschalen 31, 32 gebildetes, kastenförmiges Hohlprofil, wobei die randseitigen Flanschstege 33, 34 miteinander zu einem Flansch 35 verbunden sind. Bei der Montage greift der Flansch 35 zwischen die im Abstand zueinander verlaufenden Flanschstege 18, 19 der Crashbox 15. Im Flansch 35 des Längsträgers ist in nicht näher dargestellter Weise eine Bohrung vorgesehen, durch welche ein Bolzen 28 zur Anbindung der Crashbox 15 gesteckt wird. Aus Figur 5 ist zu erkennen, dass der Abstand zwischen den Flanschstegen 18, 19 der Crashbox 15 größer bemessen ist als die Breite des Flansches 35 des Längsträgers 30. Der Abstand zwischen dem Flansch 35 und dem benachbarten Flanschsteg 18, 19 wird im Rahmen der Erfindung als Toleranzabstand 38 bezeichnet, der beim Anziehen der Bolzen 25, 28 durch elastische oder plastische Verformung der Crashbox 15, d.h. der Flanschstege 18, 19 bzw. der Wandungen 26, 27 gegen Null geht. Die Wandungen 26, 27 der Crashbox 15 bzw. die Flanschstege 18, 19 werden gegen die Wandungen 36, 37 bzw. den Flansch 35 des Längsträgers 30 gepresst, wodurch ein fester Verbund zwischen der Crashbox 15 und dem Längsträger 30 entsteht, der die Einleitung von Anprallkräften ermöglicht.

### Bezugszeichen:

- 1 -: Längsträger
- 2 -: Crashbox
- 3 -: Halbschale v. 1
- 4 -: Halbschale v. 1
- 5 -: Halbschale v. 2
- 6 -: Halbschale v. 2
- 7 -: Befestigungspunkte zw. 5, 6
- 8 -: Befestigungsabschnitt v. 2
- 9 -: Bolzen
- 10 -: Wandung v. 1
- 11 -: Wandung v. 2
- 12 -: Toleranzabstand
- 13 -: Flansch v. 1
- 14 -: Stoßfängerquerträger
- 15 -: Crashbox
- 16 -: erste Halbschale v. 15
- 17 -: zweite Halbschale v. 15
- 18 -: Flanschsteg v. 16
- 19 -: Flanschsteg v. 17
- 20 -: Flansch v. 15
- 21-: Mittelsteg v. 14
- 22-: Schenkel v. 14
- 23 -: Mittelteil v. 15
- 24-: Endabschnitt v. 20
- 25-: Bolzen
- 26-: Wandung v. 17
- 27-: Wandung v. 16
- 28-: Bolzen
- 29-: Befestigungsabschnitt v. 15
- 30-: Längsträger
- 31 -: Halbschale v. 30
- 32 -: Halbschale v. 30
- 33-: Flanschsteg v. 30
- 34-: Flanschsteg v. 30
- 35-: Flansch v. 30
- 36-: Wandung v. 30
- 37-: Wandung v. 30
- 38-: Toleranzabstand

## Patentansprüche

1. Stoßfängeranordnung für ein Kraftfahrzeug mit einem Stoßfängerquerträger (14) und mit Crashboxen (2, 15) zur Eingliederung zwischen dem Stoßfängerquerträger (14) und Längsträgern (1, 30), wobei die Crashboxen (2, 15) Befestigungsabschnitte (8, 29) aufweisen, die über die Wandungen (11, 26, 27) der Befestigungsabschnitte (8, 29) und die Wandungen (10, 36, 37) der Längsträger (1, 30) durchsetzende Bolzen (9, 25) mit den Längsträgern (1, 30) verbunden sind, **dadurch gekennzeichnet, dass** die miteinander zu verbolzenden Wandungen (11, 26, 27; 10, 36, 37) der Befestigungsabschnitte (8, 29) und der Längsträger (1, 30) im unverbolzten Zustand in einem Toleranzabstand (12, 38) zueinander angeordnet sind und im verbolzten Zustand von den Bolzen (9, 25) gegen die Wandungen (10, 36, 37) der Längsträger (1, 30) gepresst sind, wobei die Befestigungsabschnitte (8, 29) lokal einer elastischen oder plastischen Verformung zur Selbstzentrierung der Crashboxen (2, 15) gegenüber den Längsträgern (1, 30) unterworfen sind, wobei entweder die Crashboxen (2, 15) aus jeweils zwei Halbschalen (5, 6; 16, 17) bestehen, die nur außerhalb der Befestigungsabschnitte (8, 29) miteinander verbunden sind, oder in den Wandungen der Befestigungsabschnitte Längsschlitze vorgesehen sind, so dass die Wandungen elastisch oder plastisch verformbare Befestigungszungen bilden.

2. Stoßfängeranordnung nach Anspruch 1, **dadurch gekennzeichnet, dass** die Befestigungsabschnitte (29) die Längsträger (30) außenseitig umgreifen.

3. Stoßfängeranordnung nach Anspruch 2, **dadurch gekennzeichnet, dass** die Halbschalen (18, 17) der Crashboxen (15) über randseitige Flanschstege (18, 19) miteinander zu Flanschen (20) verbunden sind, wobei die Flanschstege (18, 19) der Crashboxen (15) Bestandteil der Befestigungsabschnitte (29) sind und wobei die Längsträger (30) aus jeweils zwei Halbschalen (31, 32) gebildet sind, die ebenfalls über randseitige Flanschstege (33, 34) miteinander zu Flanschen (35) verbunden sind, wobei die Flanschstege (18, 19) der Crashboxen (15) in den Befestigungsabschnitten (29) im Abstand zueinander verlaufen und die Flansche (35) der Längsträger (30) mit Toleranzabstand (38) umgreifen.

4. Stoßfängeranordnung nach Anspruch 1, **dadurch gekennzeichnet, dass** die Befestigungsabschnitte (8) in die Längsträger (1) eingeschoben sind.

5. Stoßfängeranordnung nach einem der Ansprüche 1 bis 4 **dadurch gekennzeichnet, dass** der Stoßfängerquerträger (14) im Querschnitt hutförmig profiliert ist und einen in Richtung der Crashboxen (15) ausgestellten Mittelsteg (21) mit sich daran anschließenden abgewinkelten Schenkeln (22) aufweist, wobei die Halbschalen (16, 17) der Crashboxen (15) über randseitige Flanschstege (18, 19) miteinander zu Flanschen (20) verbunden sind, welche mit den Schenkeln (22) verbunden sind.

6. Stoßfängeranordnung nach einem der Ansprüche 1 bis 5, **dadurch gekennzeichnet, dass** der Toleranzabstand (12, 38) größer ist als die Wandstärke des Befestigungsabschnitts (8,29).

## Claims

1. Bumper arrangement for a motor vehicle, with a bumper cross member (14) and with crash boxes (2, 15) for incorporating between the bumper cross member (14) and longitudinal members (1, 30), wherein the crash boxes (2, 15) have fastening sections (8, 29) which are connected to the longitudinal members (1, 30) via bolts (9, 25) which pass through the walls (11, 26, 27) of the fastening sections (8, 29) and the walls (10, 36, 37) of the longitudinal members (1, 30), **characterized in that** in the unbolted state, the walls (11, 26, 27; 10, 36, 37) of the fastening sections (8, 29) and of the longitudinal members (1, 30), which walls are to be bolted to one another, are arranged at a tolerance distance (12, 38) with respect to one another and, in the bolted state, are pressed by the bolts (9, 25) against the walls (10, 36, 37) of the longitudinal members (1, 30), with the fastening sections (8, 29) locally undergoing an elastic or plastic deformation for the self-centring of the crash boxes (2, 15) in relation to the longitudinal members (1, 30), and with either the crash boxes (2, 15) comprising in each case two half shells (5, 6; 16, 17) which are only connected to each other outside the fastening sections (8, 29), or longitudinal slots being provided in the walls of the fastening sections such that the walls form elastically or plastically deformable fastening tongues.

2. Bumper arrangement according to Claim 1, **characterized in that** the fastening sections (29) engage around the outside of the longitudinal members (30).

3. Bumper arrangement according to Claim 2, **characterized in that** the half shells (16, 17) of the crash boxes (15) are connected to each other via edge-side flange webs (18, 19) in order to form flanges (20), the flange webs (18, 19) of the crash boxes (15) being part of the fastening sections (29), and the longitudinal members (30) being formed from in each case two half shells (31, 32) which are likewise connected to each other via edge-side flange webs (33, 34) to form flanges (35), the flange webs (18, 19) of the crash boxes (15) running at a distance from each other in the fastening sections (29) and engaging around the flanges (35) of the longitudinal members (30) at a tolerance distance (38).

4. Bumper arrangement according to Claim 1, **characterized in that** the fastening sections (8) are pushed into the longitudinal members (1).

5. Bumper arrangement according to one of Claims 1 to 4, **characterized in that** the bumper cross member (14) has a hat-shaped profile in cross section and has a central web (21) which is deployed in the direction of the crash boxes (15) and has angled limbs (22) connected thereto, with the half shells (16, 17) of the crash boxes (15) being connected to each other via edge-side flange webs (18, 19) to form flanges (20) which are connected to the limbs (22).

6. Bumper arrangement according to one of Claims 1 to 5, **characterized in that** the tolerance distance (12, 38) is greater than the wall thickness of the fastening section (8, 29).

## Revendications

1. Agencement de pare-chocs pour un véhicule automobile, comprenant un support transversal de pare-chocs (14) et des caissons d'écrasement (2,15) destinés à être intégrés entre le support transversal de pare-chocs (14) et des supports longitudinaux (1, 30), dans lequel les caissons d'écrasement (2,15) comprennent des tronçons de fixation (8, 29) qui sont reliés aux supports longitudinaux (1, 30) via des boulons (9, 25) qui traversent les parois (11, 26, 27) des tronçons de fixation (8, 29) et les parois (10, 36, 37) des supports longitudinaux (1, 30), **caractérisé en ce que** les parois (11, 26, 27 ; 10, 36, 37), à boulonner l'une à l'autre, des tronçons de fixation (8, 29) et des supports longitudinaux (1, 30) sont agencées, dans l'état non boulonné, à une distance de tolérance (12, 38) les uns par rapport aux autres et, dans l'état boulonné, ils sont pressés par les boulons (9, 25) contre les parois (10, 36, 37) des supports longitudinaux (1, 30), dans lequel les tronçons de fixation (8, 29) sont soumis localement à une déformation élastique ou plastique pour l'autocentrage des caissons d'écrasement (2, 15) par rapport aux supports longitudinaux (1, 30), dans lequel soit les caissons d'écrasement (2, 15) sont respectivement constitués de deux demi-coques (5, 6 ; 16, 17) qui sont reliées l'une à l'autre uniquement à l'extérieur des tronçons de fixation (8, 29), soit il est prévu des fentes longitudinales dans la paroi des tronçons de fixation, de sorte que les parois forment des languettes de fixation déformables élastiquement ou plastiquement.

2. Agencement de pare-chocs selon la revendication 1, **caractérisé en ce que** les tronçons de fixation (29) entourent les supports longitudinaux (30) du côté extérieur.

3. Agencement de pare-chocs selon la revendication 2, **caractérisé en ce que** les demi-coques (16, 17) des caissons d'écrasement (15) sont reliées l'une à l'autre via des barrettes de bridage (18, 19) du côté du bord pour donner des brides (20), lesdites barrettes de bridage (18, 19) des caissons d'écrasement (15) font partie des tronçons de fixation (29) et les supports longitudinaux (30) sont réalisés respectivement à partir de deux demi-coques (31, 32) qui sont reliées également l'une à l'autre via des barrettes de bridage (33, 34) du côté du bord pour donner des brides (35), les barrettes de bridage (18, 19) des caissons d'écrasement (15) s'étendent à distance l'une de l'autre dans les tronçons de fixation (29), et entourent les brides (35) des supports longitudinaux (30) avec une distance de tolérance (38).

4. Agencement de pare-chocs selon la revendication 1, **caractérisé en ce que** les tronçons de fixation (8) sont enfilés dans les supports longitudinaux (1).

5. Agencement de pare-chocs selon l'une des revendications 1 à 4, **caractérisé en ce que** le support transversal de pare-chocs (14) présente en section transversale un profil en forme de chapeau et présente une âme médiane (21) sortant en direction des caissons d'écrasement (15) avec des branches (22) coudées qui s'y raccordent, lesdites demi-coques (16, 17) des caissons d'écrasement (15) étant reliées l'une à l'autre via des barrettes de bridage (18, 19) du côté du bord pour donner des brides (22), lesquelles sont reliées aux branches (22).

6. Agencement de pare-chocs selon l'une des revendications 1 à 5, **caractérisé en ce que** la distance de tolérance (12, 38) est supérieure à l'épaisseur de parois du tronçon de fixation (8, 29).
